# EUROPEAN PATENT SPECIFICATION

(11) **EP 1 038 372 B1**
(45) Date of publication and mention of the grant of the patent: **31.08.2005**
(21) Application number: 98960137.2
(22) Date of filing: 01.12.1998
(51) Int. Cl.: H04L 12/14, H04M 15/00

(54) **SYSTEM FOR INFORMATION RELATED TO CHARGING/DEBITING RELATED TO TELECOMMUNICATION SERVICES**
INFORMATIONSSYSTEM BETREFFEND GEBÜHREN UND ABBUCHUNG FÜR TELEKOMMUNIKATIONSDIENSTE
SYSTEME D'INFORMATIONS RELATIVES A LA FACTURATION ET AU DEBIT ASSOCIEES A DES SERVICES DE TELECOMMUNICATIONS

(30) Priority: 03.12.1997 SE 9704496
(43) Date of publication of application: 27.09.2000
(73) Proprietor: Telia AB (publ), 123 86 Farsta (SE)
(72) Inventor: NORDSTRÖM, Nils-Ake, S-857 33 Sundsvall (SE)
(74) Representative: Hopfgarten, Nils
(86) International application number: PCT/SE1998/002192
(87) International publication number: WO 1999/029065

(56) References cited:
- EP-A2- 0 779 733
- WO-A1-96/12381
- WO-A1-98/24224
- WO-A2-97/16034
- GB-A- 2 311 439

## Description

### TECHNICAL FIELD

The invention relates to a method for charging/debiting as well as handling and reporting on information related to charging related to telecommunication in a packet switched network, primarily a broadband IP-network. By the invention, automatisation of charging and paying for the utilization of the telecommunications is made possible. The invention is based on three basic functions: Customer Support, Information related to charging, and Charging, as well as a common database: Customer Database.

### PRIOR ART

A great number of systems have been designed for charging of utilization of telecommunications. I. a. there are systems to charge in advance bought smart cards at telephone utilization or other systems to charge in advance paid means.

EP 779 733 describes a method of billing the use of telecommunication services, wherein the billing of the telecommunication services to a large degree is separated from the pure connection charges. The service in question is delivered to the subscriber only when authorized by the network operator and when a charge determined by the service provider is collected by the network operator.

### TECHNICAL PROBLEM

With today's handling of charging of telecommunication services, and information related to charging to customer, each service is handled separately. In an environment where a great number of different telecommunication services are offered, and each customer utilizes several services, such a handling will be unwieldy to a supplier with a large service offering to a large number of customers of different categories. By the service offering increasing all the time, also the handling problems will increase, with rising costs for the supplier at introduction of a new service and greater difficulties to distribute information about new services to customer.

The purpose of the present invention is to propose a method for charging and for handling and reporting charging information which reduces the above-mentioned problems.

This purpose is obtained by a method according to claim 1.

### TECHNICAL SOLUTION

The technical solution is characterized in a uniting database with customer and information related to charging. Processing and possibility to access information is achieved in the two functions, information related to charging, and Charging. Collection of data for charging, and transmission for handling of information related to charging is made by the MIB in the subscriber's modem.

In addition to that, there is a function for initiation Customer Support.

The technical solution as to the rest appears from the claims.

### ADVANTAGES

The invention proposes a method which handles charging and information related to charging, and information to customer. The method is independent of type of service and charges utilization of both network and service. By the method notification via post is not necessary.

By using a generic method for handling and reporting on information related to charging, the introduction of new services and functions are facilitated. By that the costs are reduced at the same time as the method provides possibility to arrange tailor-made charging functions for different user categories (for instance a certain company) and to, when necessary, change tariffs of other data for charging. The customer also will have a quick and good service by the possibility to ask the database for information related to charging and to check the own charging account.

The method does not need a network of its own, but can be operated on existing IP-based telecommunication networks via the SNMP-protocol and different security functions. By that no investments are needed in new or extended support systems.

### DESCRIPTION OF DRAWING

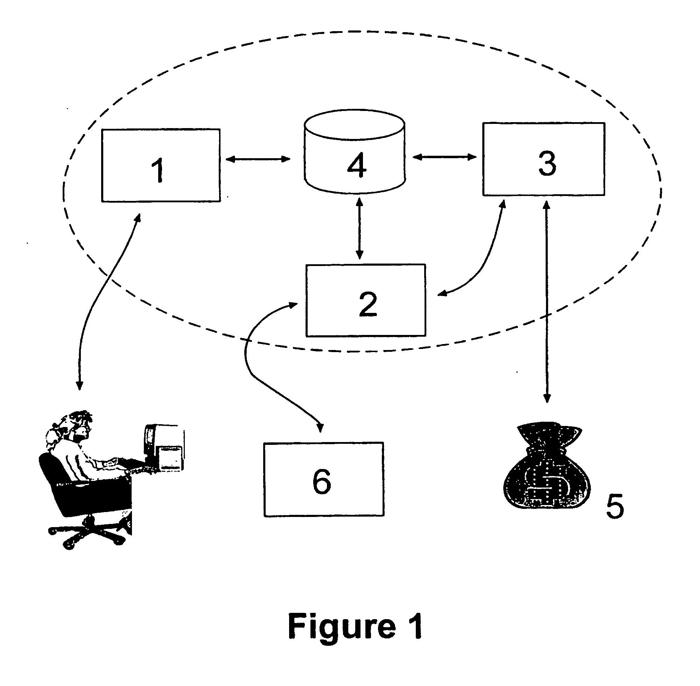

Figure 1 shows the construction of a system for handling and reporting on information related to charging related to telecommunication services. In the figure also are shown which main functions that exist in the system.

### DETAILED DESCRIPTION

### Abbreviations

- MIB: Management Information Base. Part of the SNMP-standard for definition of functionality of monitored object.
- Qos: Quality of Service. Parameters which define wanted performance for, for instance, a transmission service within ATM

### PRINCIPLE OF CHARGING

At utilization of telecommunications, both utilization of telecommunication networks and telecommunication service shall be charged. Both these utilizations shall be distinguished and charged independent of each other.

Charging of utilization of telecommunication networks shall be based on a measure of the volume that is utilized. The volume during a session can, in a packet switching network, be calculated as the product of the number of packets and an average of the length of packets.

Charging principle for utilization of telecommunication service is determined individually per service. Each service has a charging principle of its own, which is entirely determined by the utilization of the network. The charging can, for instance, be based on used time, downloaded amount of information, or QoS.

Charging can be made by an account, connected to the subscriber, being charged. The charging system charges the account for all utilization of telecommunication networks or telecommunication services. This means i. a. that utilization of a number of different services can charge the same subscriber account.

### SYSTEM CONSTRUCTION

### General

The system is constructed of a number of basic functios as well as utilization of existing functions and existing infrastructure.

### MIB (6)

In the MIB in the subscriber's modem, the network utilization is integrated before transmission of information related to network utilization to Charging Info 2. The integration is only made of transmitted messages - received messages are already charged at the transmission. Transmission to Charging Info is made at a certain integrated volume (when the MIB is "full"), periodically, or at request of Charging Info.

### Customer Support (1)

The principal task for Customer Support is to open a subscription and initiate the charging functions for a subscriber.

### Charging Info (2)

The function Charging Info handles and buffers network utilization information from MIB 6 at the subscriber's modem. By this buffering the network utilization information is compressed. It is then forwarded as information related to charging to Charging/Billing System 3.

### Charging/Billing System (3)

The Charging/Billing System handles the subscriber account of the subscription and charges it according to the information related to charging from Charging Info.

The function constitutes "billing system" by settling of the subscriber's accounts in bank 5, and in that way handles the customer's payment of utilization charges.

### Customer Database (4)

The database contains i. a. information about the customer, the customer's data related to charging, subscriber account and other data which are required for charging and for information to subscriber.

### FUNCTIONS

### Types of subscriptions

A subscription can be either of type "Complete Subscription", which includes both network access and services, or of type "Service Subscription", which only includes services.

A complete subscription includes subscriber equipment, such as broadband modem, network access, a number of services and a charging profile which the subscriber selects himself/herself. The complete subscription is charged for both network access and service access.

It is possible to subcribe only to a plurality of services and charging profiles, which here are called service subscription. Such a subscription utilizes network services from a complete subscription, which for instance can be applicable for different members of a family, who utilize their own services but will have network access by a common, complete subscription. The service subscription is charged only for service access.

### Authentication

A user has to authenticate himself/herself to get access to a wanted service. This authentication then will be the basis for charging. Charging for a service is regulated by utilized service and charging profile and is controlled by parameters arranged for the subscription, for instance utilized time, point of time, QoS, etc.

Corresponding authentication is made for the connection of the modem to the network. The utilization of network is charged the complete subscription which is concerned.

### Charging of network utilization

In order not to load the charging function Charging Info 2 from collection of data, volume of utilization of telecommunication network is calculated by accumulation of volume information in MIB 6 for concerned subscription. The information then is transferred periodically, at the request of Charging Info 2, or when the MIB is "full", to the charging function Charging/Billing System 3.

### Charging of service utilization

Each service is charged on their own conditions, for instance for IP-telephony, the charging can be controlled by type of call, such as local, national or international and Qos.

### Subscriber account

The subscriber can at any time check his/her subscriber account, or change his/her charging profile from own terminal via functions for so called Customer-Query-And-Control. The subscriber by this function can set or change limit for utilization of a certain service or network access, for instance by setting a maximum sum for cost per day/week/month/year.

### Basic data related to charging to central level

After the local charging system 2 having arranged basic data for a number of customers, an indication is transmitted to the central charging system 3 for further processing and pricing. These indications can be made periodically, or when a certain amount of information has been collected.

### Account management

The system will periodically perform charging of the subscriber's utilization of services or network access, and automatically charge the subscriber account. Further, payment can be made by automatic transfer of fixed or variable amount from bank 5. By the transfer being possible to limit, there also is a possibility to determine a maximum sum of costs per week/month/year.

Since the transfer is made automatically, and the subscriber has insight into his/her account and account information, the need for notification in connection with payment is limited.

## Claims

1. Method for charging and for handling and reporting information related to charging related to utilization of packet switched telecommunication networks and services, wherein charging (3) is made separately for utilization of a telecommunication network and of a service, parameters for charging of utilization of said service are determined per service and charging is made by charging a subscriber account, **characterized in**
- **that** charging (3) of utilization of telecommunication network is based on utilized volume
- **that** said utilized volume of telecommunication network in a packet switched network is calculated as the product of a number of transferred packets and the average length of the packets, and
- **that** data about said utilized volume is stored in a Management Information Base (6) for said subscriber account in order to be transferred therefrom to a charging function (2).

2. Method according to claim 1, **characterized in**
- **that** said subscriber account at telecommunications operator is charged automatically at said utilization of said telecommunication network or of said service,
- **that** financing of said subscriber account is made by transer of a fixed or of a variable amount from a bank account with automatic control,
- **that** limits in said utilization of said telecommunication network are individually controlled for each customer by a ceiling for utilization per day, week, month or year.

3. Method according to claim 2, **characterized in that**
- said subscriber account is checked, and a charging profile, and said limits in said utilization are changed by a customer via its own terminal.

4. Method according to any of the preceding claims, **characterized in that** a common customer database (4) is used, said subscriber account is opened and charging functions for said subscriber account are initiated in a Customer Support function (1), a network utilization information from said Management Information Base (6) is handled and buffered in a Charging Info function (2) before forwarding it to a Charging/Billing function (3), and said subscriber account is handled and charged according to a charging information received by said Charging Info function (2) in said Charging/Billing function (3).

## Patentansprüche

1. Verfahren zum In-Rechnung-Stellen und zum Handhaben und Berichten von Information, die sich auf Rechnungsstellung bezieht, die mit der Verwendung von paketvermittelten Fernmeldenetzen und Diensten zusammenhängt, wobei die Rechnungsstellung (3) getrennt für Verwendung eines Fernmeldenetzes und eines Dienstes vorgenommen wird, Parameter für die Rechnungsstellung der Verwendung des Dienstes pro Dienst bestimmt werden und die Rechnungsstellung **dadurch** vorgenommen wird, dass ein Teilnehmerkonto belastet wird, **dadurch gekennzeichnet,**
- **dass** die Rechnungsstellung (3) der Verwendung des Fernmeldenetzes aufgrund des verwendeten Volumens vorgenommen wird;
- **dass** das verwendete Volumen des Fernmeldenetzes in einem paketvermittelten Netz als das Produkt der Anzahl der übertragenen Pakete und der durchschnittlichen Länge der Pakete berechnet wird, und
- **dass** Daten über das verwendete Volumen in einer Verwaltungsinformationsbasis (6) für das Teilnehmerkonto gespeichert werden, um von dort zu einer Rechnungsstellungsfunktion (2) übertragen zu werden.

2. Verfahren nach Anspruch 1, **dadurch gekennzeichnet,**
- **dass** das Teilnehmerkonto beim Fernmeldebetreiber automatisch bei der Verwendung des Fernmeldenetzes oder des Dienstes belastet wird,
- **dass** die Finanzierung des Teilnehmerkontos durch Übertragung eines festen Betrages oder eines variablen Betrages von einem Bankkonto mit automatischer Steuerung oder Kontrolle vorgenommen wird,
- **dass** Grenzen der Verwendung des Fernmeldenetzes individuell für jeden Kunden durch eine Höchstgrenze für Verwendung pro Tag, Woche, Monat oder Jahr kontrolliert werden.

3. Verfahren nach Anspruch 2, **dadurch gekennzeichnet, dass**
- das Teilnehmerkonto geprüft wird und ein Belastungsprofil und die Grenzen der Verwendung durch einen Kunden über sein eigenes Endgerät geändert werden.

4. Verfahren nach einem der vorangehenden Ansprüche, **dadurch gekennzeichnet, dass** eine gemeinsame Kundendatenbank (4) verwendet wird, dass das Teilnehmerkonto geöffnet wird und Rechungsstellungsfunktionen für das Teilnehmerkonto in einer Kundenunterstützungsfunktion (1) initiiert werden, dass eine Netzverwendungsinformation von der Verwaltungsinformationsbasis (6) in einer Belastungsinformationsfunktion (2) gehandhabt und gepuffert wird, bevor sie zu einer Belastungs/Rechnungsstellungsfunktion (3) weitergeleitet wird, und dass das Teilnehmerkonto entsprechend einer Belastungsinformation gehandhabt und belastet wird, die durch die Belastungsinformationsfunktion (2) in der Belastungs/Rechnungsstellungsfunktion (3) empfangen wird.

## Revendications

1. Procédé pour la facturation et pour la gestion et la communication d'informations associées à la facturation concernant l'utilisation de réseaux et de services de télécommunication à commutation par paquets, dans lequel la facturation (3) est effectuée séparément pour l'utilisation d'un réseau de télécommunication et pour celle d'un service, les paramètres pour la facturation de l'utilisation du dit service sont déterminés par service et la facturation est effectuée par débit d'un compte d'abonné,
**caractérisé en ce que** !
la facturation (3) de l'utilisation du réseau de télécommunication est basée sur le volume utilisé,
le dit volume utilisé du réseau de télécommunication dans un réseau commuté par paquets est calculé comme étant le produit d'un nombre de paquets transférés et de la longueur moyenne des paquets, et
les données relatives au dit volume utilisé sont stockées dans une Base d'Information de Gestion (6) pour le dit compte d'abonné afin d'être transférées de cette base à une fonction de facturation (2).

2. Procédé selon la revendication 1, **caractérisé en ce que** :
le dit compte d'abonné chez un opérateur de télécommunication est débité automatiquement lors de la dite utilisation du dit réseau de télécommunication ou du dit service,
le financement du dit compte d'abonné est effectué par transfert d'une somme fixe ou variable à partir d'un compte bancaire, avec commande automatique,
des limites dans la dite utilisation du dit réseau des télécommunication sont individuellement fixées pour chaque client par un plafond d'utilisation par jour, semaine, mois ou année.

3. Procédé selon la revendication 2, **caractérisé en ce que** le dit compte d'abonné est vérifié, et un profil de facturation et les dites limites de la dite utilisation sont modifiés par un client via son propre terminal.

4. Procédé selon une quelconque des revendications précédentes, **caractérisé en ce qu'**une base de données de client commune (4) est utilisée, le dit compte d'abonné est ouvert et les fonctions de facturation pour le dit compte d'abonné sont démarrées dans une fonction de Support de Client (1), une information d'utilisation de réseau fournie par la dite Base d'information de Gestion (6) est traitée et mise en tampon dans une fonction d'information de Facturation (2) avant son transfert à une fonction de Facturation / Débit (3), et le dit compte d'abonné est traité et débité conformément à une information de facturation reçue par la dite fonction d'information de Facturation (2) dans la dite fonction de Facturation / Débit (3).
